# EUROPEAN PATENT APPLICATION

(11) **EP 4 324 589 A1**
(43) Date of publication of application: **21.02.2024**
(21) Application number: 21936967.5
(22) Date of filing: 15.04.2021
(51) Int. Cl.: B23Q 1/01, B23Q 1/48, B23Q 7/00, B23Q 11/00

(54) **MACHINE TOOL**

(71) Applicant: DMG Mori Co., Ltd., Yamatokoriyama-shi, Nara 639-1160 (JP)
(72) Inventor: MORI, Masahiko, Yamatokoriyama-shi, Nara 639-1160 (JP); TAGA, Mitsuru, Yamatokoriyama-shi, Nara 639-1160 (JP); MORIMOTO, Tadaharu, Yamatokoriyama-shi, Nara 639-1160 (JP); YAMAMOTO, Yoshinori, Yamatokoriyama-shi, Nara 639-1160 (JP); AIZAWA, Tatsuya, Yamatokoriyama-shi, Nara 639-1160 (JP); IKEDA, Yusuke, Yamatokoriyama-shi, Nara 639-1160 (JP); IRINO, Naruhiro, Yamatokoriyama-shi, Nara 639-1160 (JP); HIGUCHI, Yosuke, Yamatokoriyama-shi, Nara 639-1160 (JP); HARA, Hideki, Yamatokoriyama-shi, Nara 639-1160 (JP)
(74) Representative: Isarpatent
(86) International application number: PCT/JP2021/015557
(87) International publication number: WO 2022/219771

(57) **Abstract**

A machine tool includes a table (51) movable in a Z-axis direction parallel to a horizontal direction, a first guide portion (58) and a second guide portion (59) that guide the table (51) in the Z-axis direction and are arranged apart from each other in an X-axis direction, and a bed (11) that includes a first guide mounting portion (14) and a second guide mounting portion (15) on which the first guide portion (58) and the second guide portion (59) are mounted respectively, and is provided with an opening portion (211) which is located between the first guide mounting portion (14) and the second guide mounting portion (15) and penetrates in a Y-axis direction. The first guide mounting portion (14) and the second guide mounting portion (15) are respectively provided with a first facing surface (222) and a second facing surface (227) which face each other across the opening portion (211) in the X-axis direction. The bed (11) further includes a rib portion (231) which is located in the opening portion (211) and connected to the first facing surface (222) and the second facing surface (227).

## Description

### TECHNICAL FIELD

The present invention relates to a machine tool.

### BACKGROUND ART

For example, Japanese Utility Model Laying-Open No. 55-160745 (PTL 1) discloses a machine tool including a bed, a saddle which is supported slidably in a Y-axis direction by the bed, and a table which is guided slidably in an X-axis direction by the saddle. The table is provided with a plurality of chip discharge holes, and the saddle is provided with a chip drop space penetrating vertically.

Further, Japanese Patent Laying-Open No. 2007-54903 (PTL 2) discloses a machine tool including a bed. A fluid groove for causing fluid to flow is provided on the bed so as to traverse from one side surface of the bed to the other side surface.

### CITATION LIST

### PATENT LITERATURE

PTL 1: Japanese Utility Model Laying-Open No. 55-160745
PTL 2: Japanese Patent Laying-Open No. 2007-54903

### SUMMARY OF INVENTION

### TECHNICAL PROBLEM

As disclosed in the above-mentioned patent literature, a machine tool having a bed is known. In such a machine tool, when chips generated due to machining of a workpiece accumulate on the bed, it is not possible to efficiently collect the chips from the inside of a processing area. Further, the bed is a base member for supporting a table for holding a workpiece or a tool spindle for rotating a tool or the like, so that it is required to ensure sufficient rigidity of the bed.

Therefore, an object of the present invention is to solve the above-described problem, and to provide a machine tool capable of efficiently collecting chips while ensuring sufficient bed rigidity.

### SOLUTION TO PROBLEM

A machine tool according to the present invention comprises a table movable in a first axial direction parallel to a horizontal direction, a first guide portion and a second guide portion that guide the table in the first axial direction and are arranged apart from each other in a second axial direction which is parallel to the horizontal direction and orthogonal to the first axis, and a bed including a first guide mounting portion and a second guide mounting portion on which the first guide portion and the second guide portion are mounted respectively, the bed being provided with an opening portion which is located between the first guide mounting portion and the second guide mounting portion and penetrates in a third axial direction parallel to a vertical direction. The first guide mounting portion and the second guide mounting portion include a first facing surface and a second facing surface that face each other across the opening portion in the second axial direction. The bed further includes a rib portion which is arranged in the opening portion and is connected to the first facing surface and the second facing surface.

According to the thus-configured machine tool, since the bed is provided with the opening portion penetrating in the third axial direction parallel to the vertical direction, chips generated due to machining of a workpiece can be discharged from the upper side of the bed through the opening portion to the lower side of the bed. As a result, it is possible to efficiently collect the chips by improving discharging performance of chips from the bed. Further, since the bed has the rib portion arranged in the opening portion, it is possible to sufficiently secure the rigidity of the bed even though the bed is provided with the opening portion.

Preferably, the opening portion has a first open end arranged at one end of the opening portion in the first axial direction and a second open end arranged at the other end of the opening portion in the first axial direction. A length between the first open end and the second open end in the first axial direction is greater than a length of the opening portion in the second axial direction.

According to the thus-configured machine tool, by sufficiently ensuring the length between the first open end and the second open end in the first axial direction along which the table moves with respect to the length of the opening portion in the second axial direction, it is possible to achieve good chip discharging performance regardless of the position of the table in the first axial direction.

Preferably, the opening portion has a first open end arranged at one end of the opening portion in the first axial direction and a second open end arranged at the other end of the opening portion in the first axial direction. A length between the first open end and the second open end in the first axial direction is greater than a maximum stroke length of the table in the first axial direction.

According to the thus-configured machine tool, the length between the first open end and the second open end in the first axial direction along which the table moves is sufficiently ensured with respect to the maximum stroke length of the table in the first axial direction, whereby it is possible to achieve good chip discharging performance regardless of the position of the table in the first axial direction.

Preferably, the machine tool further comprises an automatic pallet changer (APC) for changing a pallet to be mounted on the table. The bed further includes an APC mounting portion that connects the first guide mounting portion and the second guide mounting portion at one end side of the opening portion in the first axial direction, the automatic pallet changer being mounted on the APC mounting portion. The table is rotatable around a rotation center axis extending in the third axial direction. When the table is positioned at a pallet change position by the automatic pallet changer, the rotation center axis is arranged at a position overlapping an opening of the opening portion when viewed in the third axial direction.

According to the thus-configured machine tool, when the table positioned at the pallet change position changes the pallet by the automatic pallet changer, the rotation center axis of the table is arranged at the position overlapping the opening of the opening portion when viewed in the third axial direction parallel to the vertical direction, so that it is possible to achieve good chip discharging performance at the time of changing pallets.

Preferably, the machine tool further comprises a cover body that defines a processing area on the bed. The opening area of the opening portion when the opening portion is cut by a horizontal plane is 20% or more of the area of the processing area when the processing area is cut by a horizontal plane.

According to the thus-configured machine tool, it is possible to achieve good chip discharging performance by increasing the ratio of the opening area of the opening portion to the area of the processing area.

Preferably, the rib portion includes a lower surface parallel to a horizontal plane, a first side surface and a second side surface that respectively rise from both end portions of the lower surface in the first axial direction, a first inclined surface extending obliquely upward from an upper end portion of the first side surface along the first axial direction, and a second inclined surface that extends obliquely upward from an upper end portion of the second side surface along the first axial direction and intersects with the first inclined surface.

According to the thus-configured machine tool, at the upper portion of the rib portion, accumulation of chips on the rib portion can be restrained by the first inclined surface and the second inclined surface. Further, at the lower portion of the rib portion, the geometrical moment of inertia of the rib portion can be increased due to the rectangular shape formed by the lower surface, the first side surface, and the second side surface.

Preferably, the machine tool further comprises an automatic pallet changer (APC) for changing a pallet to be mounted on the table, and a column for supporting a tool spindle. The bed further includes an APC mounting portion that connects the first guide mounting portion and the second guide mounting portion on one end side of the opening portion in the first axial direction, the automatic pallet changer being mounted on the APC mounting portion, a column mounting portion that connects the first guide mounting portion and the second guide mounting portion on the other end side of the opening portion in the first axial direction, the column being mounted on the column mounting portion, a first fixing portion that is provided in the APC mounting portion and is fixed to a floor on which the machine tool is installed, and a second fixing portion and a third fixing portion that are provided in the column mounting portion, are located apart from each other in the second axial direction, and are fixed to the floor on which the machine tool is installed. The opening portion has a first open end arranged at one end of the opening portion in the first axial direction and a second open end arranged at the other end of the opening portion in the first axial direction. The rib portion is provided at a position closer to the first open end than the second open end in the first axial direction.

According to the thus-configured machine tool, the APC mounting portion arranged on one end side of the opening portion in the first axial direction is fixed to the floor by the first fixing portion, and the column mounting portion arranged on the other end side of the opening portion in the first axial direction is fixed to the floor by the second fixing portion and the third fixing portion, so that the bed is likely to vibrate on one end side of the opening portion in the first axial direction when external force is applied to the bed. On the other hand, the rib portion is provided at the position closer to the first open end arranged at one end of the opening portion in the first axial direction than the second open end arranged at the other end of the opening portion in the first axial direction, whereby vibration occurring on the one end side of the opening portion in the first axial direction can be effectively restrained. Moreover, since the rib portion is provided at a position farther apart from the column in the first axial direction, chips generated due to machining of a workpiece by the tool spindle can be efficiently discharged through the opening portion.

### ADVANTAGEOUS EFFECT OF INVENTION

As described above, according to the present invention, it is possible to provide a machine tool capable of efficiently collecting chips while sufficiently ensuring the rigidity of a bed.

### BRIEF DESCRIPTION OF DRAWINGS

Fig. 1 is a perspective view showing a machine tool according to Embodiment 1 of the present invention.
Fig. 2 is a top view showing the machine tool in Fig. 1.
Fig. 3 is a side view showing the machine tool in Fig. 1.
Fig. 4 is a front view showing the machine tool in Fig. 1.
Fig. 5 is a perspective view showing a bed in Fig. 1.
Fig. 6 is a top view showing the bed in Fig. 1.
Fig. 7 is a cross-sectional view showing the bed as viewed in a direction of an arrow on line VII-VII in Fig. 6.
Fig. 8 is a top view showing the relationship between an opening area of an opening portion and an opening area of a processing area.
Fig. 9 is a top view partially showing a modification of the bed in Fig. 6.
Fig. 10 is a perspective view showing a machine tool (when a table is in a reference posture) according to Embodiment 2 of the present invention.
Fig. 11 is a perspective view showing the machine tool (when the table is in an inverted posture) according to Embodiment 2 of the present invention.

### DESCRIPTION OF EMBODIMENTS

Embodiments of the present invention will be described with reference to the drawings. In the drawings referred to below, the same or corresponding members are given the same reference numerals.

### (Embodiment 1)

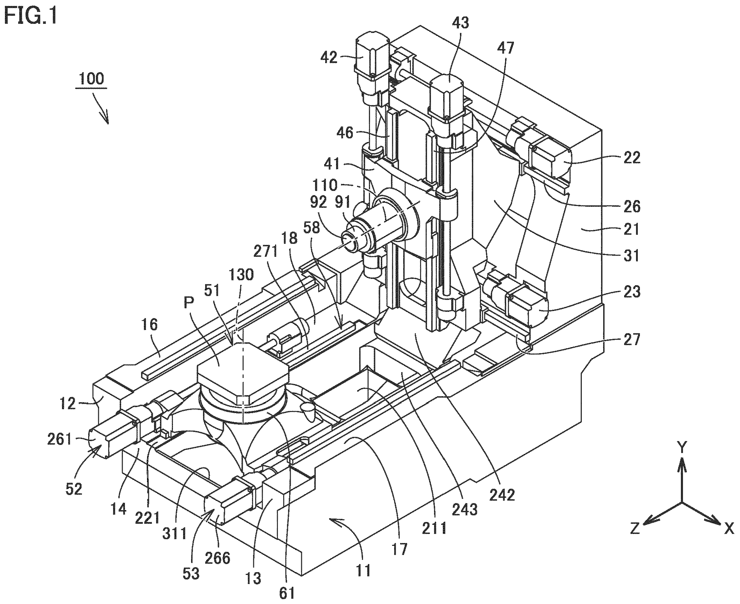

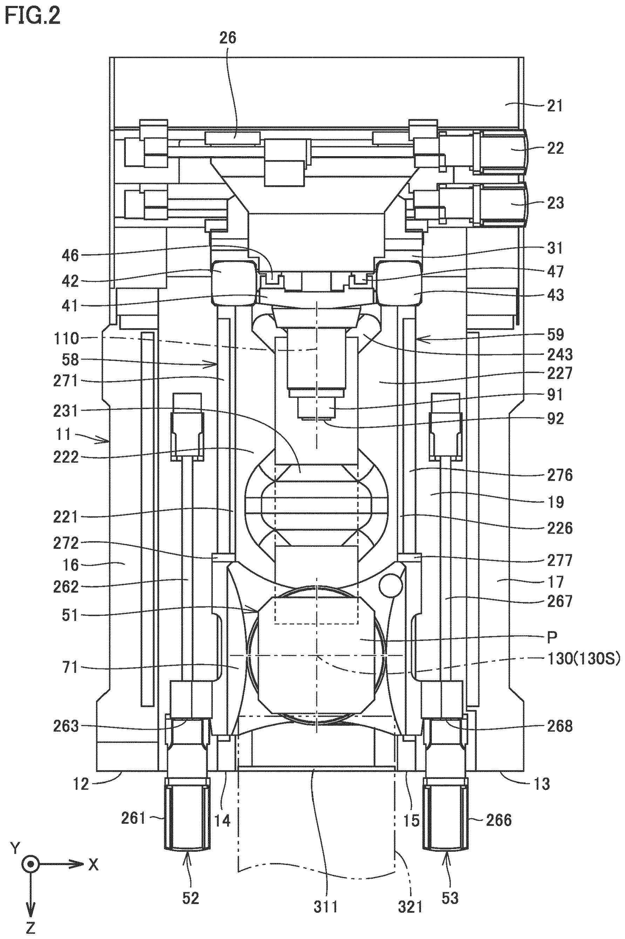

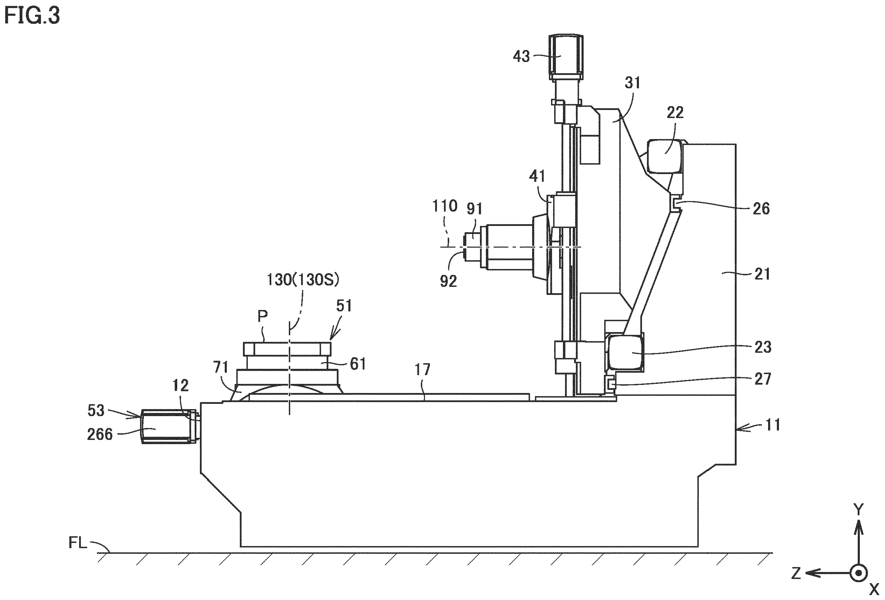

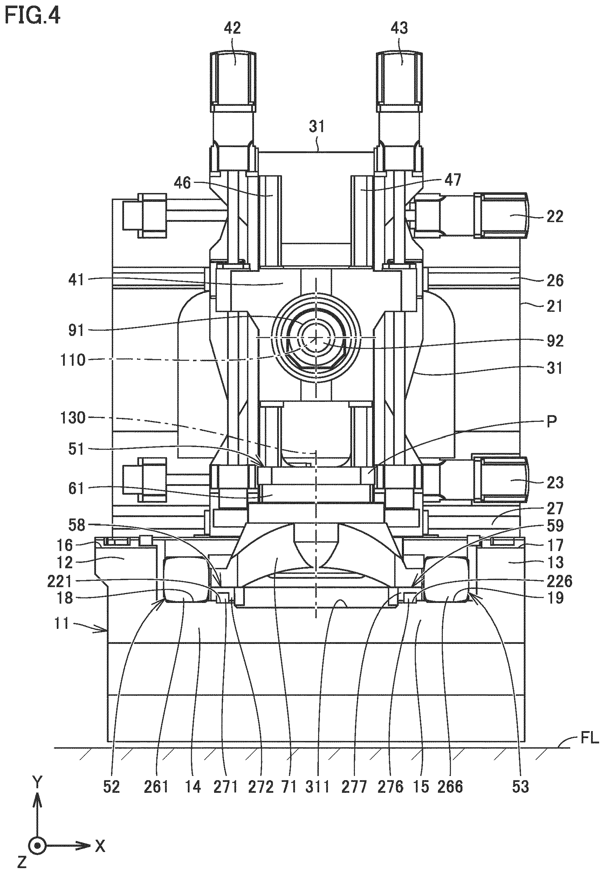

Fig. 1 is a perspective view showing a machine tool according to Embodiment 1 of the present invention. Fig. 2 is a top view showing the machine tool in Fig. 1. Fig. 3 is a side view showing the machine tool in Fig. 1. Fig. 4 is a front view showing the machine tool in Fig. 1.

In the figures, the internal structure of the machine tool is shown by looking through a cover body that forms the exterior of the machine tool.

Referring to Figs. 1 to 4, a machine tool 100 in the present embodiment is a machining center that performs machining on a workpiece by bringing a rotating tool into contact with the workpiece. Machine tool 100 is a horizontal machining center in which the central axis of rotation of the tool extends horizontally. Machine tool 100 is an NC (Numerically Controlled) machine tool in which various operations for machining of a workpiece are automated by numerical control using a computer.

In the present specification, an axis that is parallel to a horizontal direction and parallel to the moving direction of a table (the central axis of rotation of the tool) is referred to as a "Z-axis (first axis)", an axis that is parallel to the horizontal direction and orthogonal to the Z-axis is referred to as an "X-axis (second axis)", and an axis parallel to a vertical direction is referred to as a "Y-axis (third axis)". A right direction in Fig. 2 is a "+X-axis direction", and a left direction is a "-X-axis direction". A left direction in Fig. 3 is a "+Z-axis direction", and a right direction is a "-Z-axis direction". An upward direction is a "+Y-axis direction", and a downward direction is a "-Y-axis direction".

First, the overall structure of machine tool 100 will be described. Machine tool 100 includes a bed 11, a column 21, a saddle 31, a cross slide 41, and a tool spindle 91.

Bed 11 is a base member for supporting column 21, saddle 31, cross slide 41, tool spindle 91, a table 51 described later, and the like, and is installed on the floor of a factory or the like. Bed 11 is made of metal such as cast iron.

Bed 11 has a rectangular shape with long sides extending in the Z-axis direction and short sides extending in the X-axis direction in top view as viewed in the Y-axis direction. The overall length of bed 11 in the Y-axis direction is smaller than the overall length of bed 11 in the Z-axis direction, and smaller than the overall length of bed 11 in the X-axis direction.

Bed 11 has a first peripheral wall portion 12 and a second peripheral wall portion 13. First peripheral wall portion 12 and second peripheral wall portion 13 are provided on the periphery of bed 11 when viewed from above. First peripheral wall portion 12 and second peripheral wall portion 13 are provided at both end portions of bed 11 in the X-axis direction. First peripheral wall portion 12 is provided at an end portion of bed 11 in the -X-axis direction. Second peripheral wall portion 13 is provided at an end portion of bed 11 in the +X-axis direction. First peripheral wall portion 12 and second peripheral wall portion 13 extend along the Z-axis direction while forming wall shapes rising upward.

First peripheral wall portion 12 has a first top surface 16. Second peripheral wall portion 13 has a second top surface 17. First top surface 16 and second top surface 17 are planes parallel to an X-axis-Z-axis plane. First top surface 16 and second top surface 17 face upward.

Bed 11 further has a first guide mounting portion 14 and a second guide mounting portion 15. First guide mounting portion 14 forms a step recessed downward from first peripheral wall portion 12. Second guide mounting portion 15 forms a step recessed downward from second peripheral wall portion 13. First guide mounting portion 14 is provided between first peripheral wall portion 12 and second guide mounting portion 15 in the X-axis direction. Second guide mounting portion 15 is provided between first guide mounting portion 14 and second peripheral wall portion 13 in the X-axis direction.

First guide mounting portion 14 has a third top surface 18. First top surface 16 is arranged above third top surface 18. First peripheral wall portion 12 forms a wall shape rising upward from third top surface 18. Second guide mounting portion 15 has a fourth top surface 19. Second top surface 17 is arranged above fourth top surface 19. Second peripheral wall portion 13 forms a wall shape rising upward from fourth top surface 19.

Column 21 is erected on bed 11. Column 21 as a whole has a gate-like shape rising upward from bed 11. Column 21 is fixed to bed 11. Column 21 is arranged at an end portion of bed 11 in the -Z-axis direction.

Saddle 31 is supported by column 21. Saddle 31 is provided on the front surface of column 21 facing the +Z-axis direction. Saddle 31 as a whole has a gate-like shape rising upward from bed 11. Saddle 31 is provided to be movable in the X-axis direction with respect to column 21 by feeding devices 22 and 23 and guide portions 26 and 27 provided on column 21 and the like.

Cross slide 41 is supported by saddle 31. Cross slide 41 is provided on the front surface of saddle 31 facing the +Z-axis direction. Cross slide 41 as a whole has a plate-like shape parallel to an X-axis-Y-axis plane. Cross slide 41 is provided to be movable in the Y-axis direction (vertical direction) with respect to saddle 31 by feeding devices 42 and 43 and guide portions 46 and 47 provided on saddle 31 and the like.

Tool spindle 91 is supported by cross slide 41. Tool spindle 91 is fixed to cross slide 41. Tool spindle 91 penetrates through cross slide 41, and protrudes from cross slide 41 in the +Z-axis direction and the -Z-axis direction. Tool spindle 91 is supported by column 21 via cross slide 41. Tool spindle 91 moves in the Y-axis direction (vertical direction) together with cross slide 41 with respect to saddle 31.

Tool spindle 91 is provided so as to be driven rotatably about a rotation center axis 110 parallel to the Z-axis by a motor. Tool spindle 91 holds a tool for machining a workpiece in machine tool 100. In accordance with the rotation of tool spindle 91, the tool held by tool spindle 91 rotates about rotation center axis 110.

Machine tool 100 further has table 51. Table 51 is supported by bed 11. Table 51 is provided on bed 11. Table 51 is provided at a position spaced away from column 21, saddle 31 and cross slide 41 in the +Z-axis direction. Table 51 is a device for holding a workpiece. Table 51 holds the workpiece at a position facing tool spindle 91 in the Z-axis direction. Table 51 is provided to be movable in the Z-axis direction with respect to bed 11.

Table 51 has a workpiece holder 61 and a table base 71. Workpiece holder 61 is provided on bed 11. Workpiece holder 61 is arranged between first peripheral wall portion 12 and second peripheral wall portion 13 in the X-axis direction. Workpiece holder 61 detachably holds a workpiece. A pallet P is mounted on workpiece holder 61. For example, a jig such as an angle rest to which a workpiece is attached is mounted on pallet P.

Workpiece holder 61 is supported by table base 71. Table base 71 is provided below workpiece holder 61. When viewed from above, table base 71 is provided to straddle between first guide mounting portion 14 (third top surface 18) and second guide mounting portion 15 (fourth top surface 19) in the X-axis direction.

Workpiece holder 61 is incorporated with a rotating mechanism portion (not shown) for rotating pallet P around a rotation center axis 130 extending in the Y-axis direction, and a clamping mechanism portion (not shown) for clamping and unclamping pallet P.

As shown in Fig. 2, machine tool 100 further has an automatic pallet changer (APC: Automatic Pallet Changer) 321. Automatic pallet changer 321 is arranged on the opposite side to tool spindle 91 across table 51 in the Z-axis direction. Automatic pallet changer 321 is mounted on bed 11.

Automatic pallet changer 321 changes pallets to be mounted on table 51. Automatic pallet changer 321 changes pallets inside and outside the processing area. During pallet change by automatic pallet changer 321, table 51 is arranged at a pallet change position corresponding to a stroke end in the +Z-axis direction.

Automatic pallet changer 321 exchanges pallet P on table 51 inside the processing area and a pallet on a setup station (not shown) outside the processing area. Automatic pallet changer 321 is configured by an arm mechanism that can simultaneously hold pallet P on table 51 and the pallet on the setup station, and can perform vertical movement and turning movement about a vertical axis.

The structure of automatic pallet changer 321 is not particularly limited, and may be configured by, for example, an arm mechanism capable of performing vertical movement and sliding movement in the Z-axis direction.

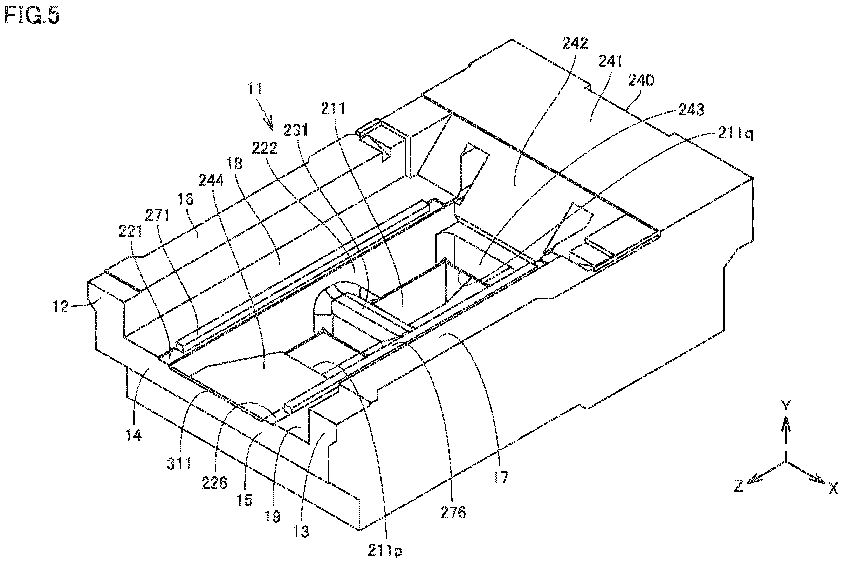

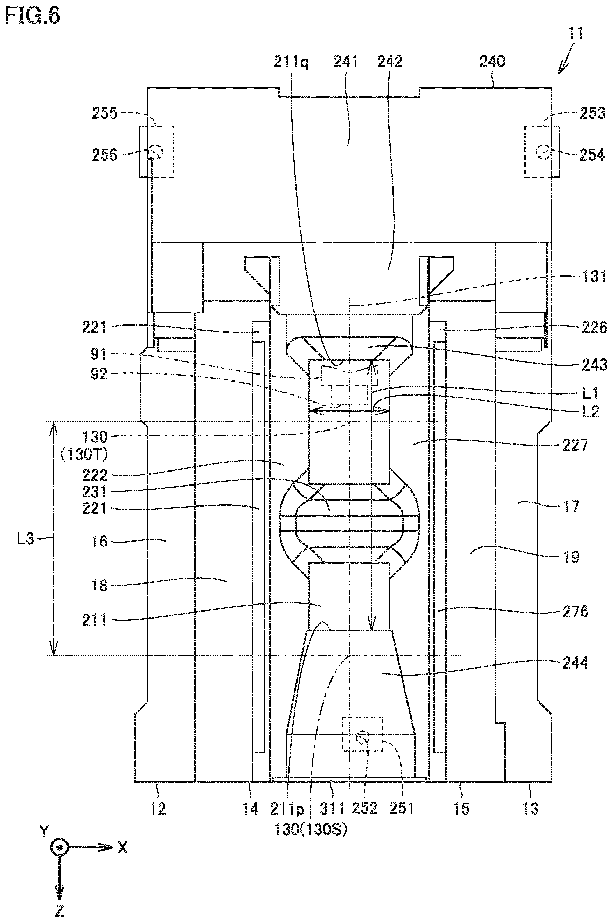

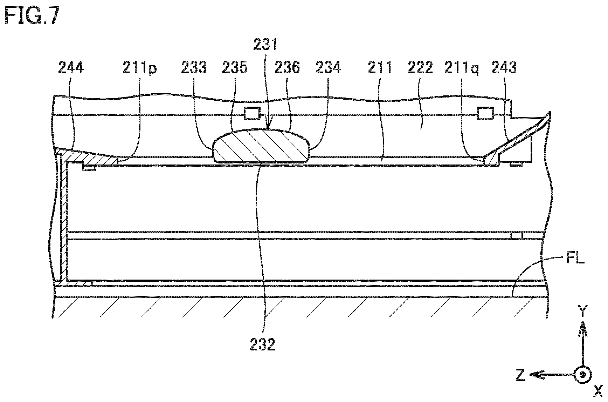

Next, a more specific structure of bed 11 and a movement mechanism of table 51 will be described. Fig. 5 is a perspective view showing the bed in Fig. 1. Fig. 6 is a top view showing the bed in Fig. 1. Fig. 7 is a cross-sectional view showing the bed as viewed in the arrow direction on line VII-VII in Fig. 6.

Referring to Figs. 1 to 7, bed 11 further has an APC mounting portion 311, and a column mounting portion 240.

APC mounting portion 311 is provided at the end portion of bed 11 in the +Z-axis direction. APC mounting portion 311 is arranged between first guide mounting portion 14 and second guide mounting portion 15 in the X-axis direction. APC mounting portion 311 extends in the X-axis direction, and connects first guide mounting portion 14 and second guide mounting portion 15. APC mounting portion 311 is connected to first guide mounting portion 14 at the end portion in the -X-axis direction. APC mounting portion 311 is connected to second guide mounting portion 15 at the end portion in the +X-axis direction.

Column mounting portion 240 is provided at the end portion of bed 11 in the -Z-axis direction. Column mounting portion 240 extends in the X-axis direction and connects first guide mounting portion 14 and second guide mounting portion 15. Column mounting portion 240 is connected to the end portions of first peripheral wall portion 12 and first guide mounting portion 14 in the -Z-axis direction at the end portion in the -X-axis direction. Column mounting portion 240 is connected to the end portions of second peripheral wall portion 13 and second guide mounting portion 15 in the -Z-axis direction at the end portion in the +X-axis direction.

Automatic pallet changer 321 is mounted on APC mounting portion 311. Column 21 is mounted on column mounting portion 240. Column mounting portion 240 has a fifth top surface 241. Column 21 is placed on fifth top surface 241.

First guide mounting portion 14 and second guide mounting portion 15 further have a first guide mounting surface 221 and a second guide mounting surface 226, respectively. First guide mounting surface 221 and second guide mounting surface 226 are planes parallel to the X-axis-Z-axis plane. First guide mounting surface 221 and second guide mounting surface 226 each extend in a strip shape in the Z-axis direction.

Machine tool 100 further includes a first feeding device 52, a second feeding device 53, a first guide portion 58, and a second guide portion 59. Table 51 is provided to be movable in the Z-axis direction by first feeding device 52, second feeding device 53, first guide portion 58 and second guide portion 59.

First feeding device 52 and second feeding device 53 are provided on bed 11 and table 51. First feeding device 52 and second feeding device 53 are arranged apart from each other in the X-axis direction. First feeding device 52 and second feeding device 53 are provided on third top surface 18 and fourth top surface 19, respectively. First feeding device 52 and second feeding device 53 apply driving force to table 51 to move table 51 in the Z-axis direction.

As shown in Fig. 2, first feeding device 52 has a servomotor 261, a screw shaft 262 and a nut 263. Second feeding device 53 has a servomotor 266, a screw shaft 267 and a nut 268.

Screw shaft 262 extends in the Z-axis direction. Screw shaft 262 is rotatably supported by a plurality of bearings arranged apart from each other in the Z-axis direction. Nut 263 is fitted onto screw shaft 262 via a plurality of balls. Nut 263 is attached to table 51 (table base 71). Screw shaft 262 and nut 263 constitute a ball screw. The output shaft of servomotor 261 is connected to screw shaft 262. Rotation from servomotor 261 is input to screw shaft 262.

Screw shaft 267 extends in the Z-axis direction. Screw shaft 267 is rotatably supported by a plurality of bearings arranged apart from each other in the Z-axis direction. Nut 268 is fitted onto screw shaft 267 via a plurality of balls. Nut 268 is attached to table 51 (table base 71). Screw shaft 267 and nut 268 constitute a ball screw. The output shaft of servomotor 266 is connected to screw shaft 267. Rotation from servomotor 266 is input to screw shaft 267.

First guide portion 58 and second guide portion 59 are provided on bed 11 and table 51. First guide portion 58 and second guide portion 59 are arranged apart from each other in the X-axis direction. First guide portion 58 and second guide portion 59 are mounted on first guide mounting portion 14 and second guide mounting portion 15, respectively. First guide portion 58 and second guide portion 59 guide table 51 in the Z-axis direction.

First guide portion 58 is arranged side by side with first feeding device 52 in the X-axis direction. Second guide portion 59 is arranged side by side with second feeding device 53 in the X-axis direction. First guide portion 58 is arranged between first feeding device 52 and second guide portion 59 in the X-axis direction. Second guide portion 59 is arranged between first guide portion 58 and second feeding device 53 in the X-axis direction.

As shown in Figs. 2 and 4, first guide portion 58 has a rail 271 and a slider 272. Rail 271 extends in the Z-axis direction. Rail 271 is attached to first guide mounting surface 221 with a bolt. Slider 272 is fitted to rail 271 via a plurality of balls. Slider 272 is guided by rail 271, whereby slider 272 is slidable in the Z-axis direction. Slider 272 is attached to table 51 (table base 71). Rail 271 and slider 272 constitute a linear guide which is a linear guide mechanism.

Second guide portion 59 has a rail 276 and a slider 277. Rail 276 extends in the Z-axis direction. Rail 276 is attached to second guide mounting surface 226 with a bolt. Slider 277 is fitted to rail 276 via a plurality of balls. Slider 277 is guided by rail 276, whereby slider 277 is slidable in the Z-axis direction. Slider 277 is attached to table 51 (table base 71). Rail 276 and slider 277 constitute a linear guide which is a linear guide mechanism.

As shown in Figs. 2, 5, 6 and 7, bed 11 is provided with an opening portion 211. Opening portion 211 is located between first guide mounting portion 14 and second guide mounting portion 15 in the X-axis direction. Opening portion 211 is located between APC mounting portion 311 and column mounting portion 240 in the Z-axis direction. Opening portion 211 penetrates bed 11 in the Y-axis direction.

Fig. 6 shows a rotation center axis 130S of pallet P when table 51 is positioned at a stroke end in the +Z-axis direction, that is, a pallet change position by automatic pallet changer 321, and a rotation center axis 130T of pallet P when table 51 is positioned at a stroke end in the -Z-axis direction.

Opening portion 211 has a first open end 211p and a second open end 211q. First open end 211p is arranged at one end of opening portion 211 in the Z-axis direction. First open end 211p corresponds to an end portion of opening portion 211 in the +Z-axis direction. Second open end 211q is arranged at the other end of opening portion 211 in the Z-axis direction. Second open end 211q corresponds to an end portion of opening portion 211 in the -Z-axis direction.

As shown in Fig. 6, a length L1 between first open end 211p and second open end 211q in the Z-axis direction is greater than a length L2 of opening portion 211 in the X-axis direction (L1>L2). Opening portion 211 forms an opening having a rectangular shape in which the Z-axis direction is set to a longitudinal direction and the X-axis direction is set to a lateral direction in top view. Opening portion 211 forms an opening (space) that has a rectangular shape in top view, and extends in the Y-axis direction (vertical direction) and penetrates bed 11.

Length L1 between first open end 211p and second open end 211q in the Z-axis direction is greater than a maximum stroke length L3 of table 51 in the Z-axis direction (L1>L3).

Rotation center axis 130S of pallet P is arranged at a position overlapping a third facing surface 244 described later in top view. Rotation center axis 130S of pallet P is arranged at a position closer to the +Z-axis direction than first open end 211p.

Rotation center axis 130T of pallet P is arranged at a position overlapping the opening of opening portion 211 in top view. A spindle end face 92 of tool spindle 91 is arranged at a position overlapping the opening of opening portion 211 in top view.

Note that a chip discharge mechanism (not shown) for discharging chips generated during machining of a workpiece in machine tool 100 to the outside of the machine is provided just below opening portion 211.

First guide mounting portion 14 and second guide mounting portion 15 have a first facing surface 222 and a second facing surface 227, respectively. First facing surface 222 and second facing surface 227 faces each other across opening portion 211 in the X-axis direction.

First facing surface 222 is provided side by side with first guide mounting surface 221 in the X-axis direction. First facing surface 222 is inclined downward from first guide mounting surface 221 to opening portion 211 in the X-axis direction. First facing surface 222 extends from first guide mounting surface 221 to opening portion 211 in the +X-axis direction and the - Y-axis direction. First facing surface 222 consists of a plane. First facing surface 222 extends along first guide mounting surface 221 in the Z-axis direction in a strip shape in top view.

Second facing surface 227 is provided side by side with second guide mounting surface 226 in the X-axis direction. Second facing surface 227 is inclined downward from second guide mounting surface 226 to opening portion 211 in the X-axis direction. Second facing surface 227 extends from second guide mounting surface 226 to opening portion 211 in the -X-axis direction and the -Y-axis direction. Second facing surface 227 consists of a plane. Second facing surface 227 extends in the Z-axis direction along second guide mounting surface 226 in a strip shape in top view.

First facing surface 222 and second facing surface 227 are provided symmetrically with respect to table 51 interposed therebetween.

APC mounting portion 311 and column mounting portion 240 have a third facing surface 244 and a fourth facing surface 243, respectively. Third facing surface 244 and fourth facing surface 243 face each other across opening portion 211 in the Z-axis direction.

Third facing surface 244 is inclined downward toward opening portion 211 in the Z-axis direction. Third facing surface 244 extends in the -Z-axis direction and the -Y-axis direction toward opening portion 211. Third facing surface 244 consists of a plane. Third facing surface 244 extends in a strip shape in the X-axis direction. Third facing surface 244 is connected to an end portion in the +Z-axis direction of first facing surface 222 at an end portion of third facing surface 244 in the -X-axis direction. Third facing surface 244 is connected to an end portion in the +Z-axis direction of second facing surface 227 at an end portion of third facing surface 244 in the +X-axis direction.

Fourth facing surface 243 is inclined downward toward opening portion 211 in the Z-axis direction. Fourth facing surface 243 extends in the +Z-axis direction and the -Y-axis direction toward opening portion 211. Fourth facing surface 243 consists of a plane. Fourth facing surface 243 extends in a strip shape in the X-axis direction. Fourth facing surface 243 is connected to an end portion in the -Z-axis direction of first facing surface 222 at an end portion in the -X-axis direction of fourth facing surface 243. Fourth facing surface 243 is connected to an end portion in the -Z-axis direction of second facing surface 227 at an end portion in the +X-axis direction of fourth facing surface 243.

First facing surface 222, third facing surface 244, second facing surface 227 and fourth facing surface 243 are provided so as to surround opening portion 211.

Column mounting portion 240 further has an inclined surface 242. Inclined surface 242 is arranged between fifth top surface 241, and third top surface 18, fourth facing surface 243 and fourth top surface 19 in the Z-axis direction. Inclined surface 242 is inclined downward from fifth top surface 241 toward third top surface 18, fourth facing surface 243 and fourth top surface 19 in the Z-axis direction. Inclined surface 242 extends from fifth top surface 241 toward third top surface 18, fourth facing surface 243 and fourth top surface 19 in the +Z-axis direction and the -Y-axis direction.

The inclination of inclined surface 242 may be steeper than the inclination of fourth facing surface 243, may be the same as the inclination of fourth facing surface 243, or may be gentler than the inclination of fourth facing surface 243. The inclination of fourth facing surface 243 may be steeper than the inclination of third facing surface 244, may be the same as the inclination of third facing surface 244, or may be gentler than the inclination of third facing surface 244.

Bed 11 further has a rib portion 231. Rib portion 231 is arranged at opening portion 211. Rib portion 231 extends like a rib in the X-axis direction. Rib portion 231 is connected to first facing surface 222 and second facing surface 227. Rib portion 231 is provided integrally with first guide mounting portion 14 and second guide mounting portion 15 by cast iron forming bed 11.

As shown in Fig. 6, rib portion 231 is provided so as to overlap the opening of opening portion 211 in top view. Rib portion 231 is arranged between first open end 211p and second open end 211q in the Z-axis direction. Rib portion 231 is arranged at a position closer to first open end 211p than second open end 211q in the Z-axis direction.

Rib portion 231 is arranged between rotation center axis 130S of pallet P and rotation center axis 130T of pallet P in the Z-axis direction. Rib portion 231 is arranged at a position closer to rotation center axis 130T of pallet P than rotation center axis 130S of pallet P in the Z-axis direction.

Rib portion 231 may be arranged at a central position between first open end 211p and second open end 211q in the Z-axis direction, or may be arranged at a position closer to second open end 211q than first open end 211p. Rib portion 231 may be arranged at a center position between rotation center axis 130S of pallet P and rotation center axis 130T of pallet P in the Z-axis direction, or may be arranged at a position closer to rotation center axis 130S of pallet P than rotation center axis 130T of pallet P.

Rib portion 231 is arranged at a position closer to the +Z-axis direction than spindle end face 92 of tool spindle 91 in the Z-axis direction.

In the present embodiment, by providing opening portion 211 in bed 11, chips generated during machining of the workpiece can be discharged from the processing area above bed 11 to the outside of the processing area below bed 11 through opening portion 211. As a result, it is possible to improve the chip discharging performance from bed 11 to efficiently collect the chips. Further, by providing bed 11 with rib portion 231, the rigidity of bed 11 can be sufficiently ensured even though bed 11 is provided with opening portion 211.

Further, length L1 between first open end 211p and second open end 211q in the Z-axis direction is greater than length L2 of opening portion 211 in the X-axis direction. Length L1 between first open end 211p and second open end 211q in the Z-axis direction is greater than maximum stroke length L3 of table 51 in the Z-axis direction. According to such a configuration, the length between first open end 211p and second open end 211q in the Z-axis direction along which table 51 moves is sufficiently secured, whereby excellent chip discharging performance can be achieved irrespective of the position of table 51 in the Z-axis direction.

Fig. 7 shows the cross-sectional shape of rib portion 231 when it is cut along a Y-axis-Z-axis plane. As shown in Fig. 7, rib portion 231 has a lower surface 232, a first side surface 233, a second side surface 234, a first inclined surface 235 and a second inclined surface 236.

Lower surface 232 extends in parallel to the horizontal plane (X-axis-Y-axis plane). First side surface 233 and second side surface 234 rise up from both end portions of lower surface 232 in the Z-axis direction, respectively. First side surface 233 rises from the end portion of lower surface 232 in the +Z-axis direction, and second side surface 234 rises from the end portion of lower surface 232 in the -Z-axis direction. First side surface 233 and second side surface 234 extend in parallel to the vertical plane (X-axis-Y-axis).

First inclined surface 235 extends obliquely upward along the Z-axis direction from the upper end portion of first side surface 233. First inclined surface 235 extends from the upper end portion of first side surface 233 in the -Z-axis direction and the +Y-axis direction. First inclined surface 235 is inclined such that the inclination is gentler as it is spaced more away from the upper end portion of first side surface 233. First inclined surface 235 is a curved surface that is convex upward. Note that first inclined surface 235 may be configured as a flat surface.

Second inclined surface 236 extends obliquely upward along the Z-axis direction from the upper end portion of second side surface 234. Second inclined surface 236 extends from the upper end portion of second side surface 234 in the +Z-axis direction and the +Y-axis direction. Second inclined surface 236 is inclined such that the inclination becomes gentler as it is spaced more away from the upper end portion of second side surface 234. Second inclined surface 236 is a curved surface that is convex upward. Second inclined surface 236 intersects with first inclined surface 235. Note that second inclined surface 236 may be configured as a flat surface.

According to such a configuration, chips can be prevented from accumulating on the upper portion of rib portion 231 by first inclined surface 235 and second inclined surface 236. Further, at the lower portion of rib portion 231, the geometrical moment of inertia of rib portion 231 can be sufficiently ensured by a rectangular shape formed by lower surface 232, first side surface 233 and second side surface 234. As a result, the rigidity of bed 11 can be further enhanced by rib portion 231.

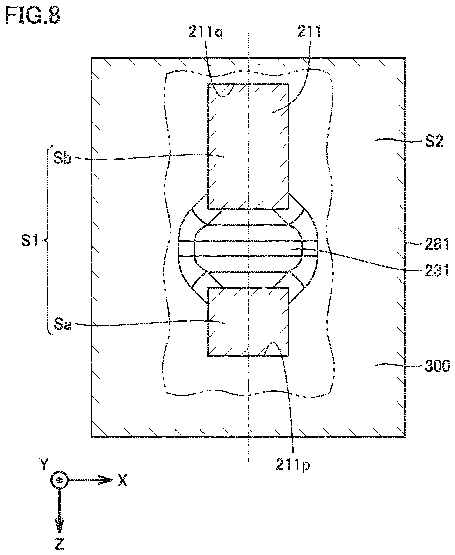

Fig. 8 is a top view showing the relationship between the opening area of the opening portion and the opening area of the processing area. Referring to Fig. 8, machine tool 100 further has a cover body 281. Cover body 281 defines a processing area 300. Processing area 300 is a space in which a workpiece is machined on bed 11, and is tightly sealed so that foreign matter such as chips or cutting oil resulting from the machining of the workpiece does not leak out of processing area 300.

An opening area S1 of opening portion 211 when cut by a horizontal plane is 20% or more of an area S2 of processing area 300 when cut by a horizontal plane (S1≥0.2×S2).

Opening area S1 of opening portion 211 when cut by a horizontal plane is equal to the sum of an opening area Sa of opening portion 211 between first open end 211p and rib portion 231 in the Z-axis direction, and an opening area Sb of opening portion 211 between rib portion 231 and second open end 211q in the Z-axis direction (S1=Sa+Sb). The area of processing area 300 when cut by a horizontal plane may change depending on the position (height) of the horizontal plane. In this case, area S2 of processing area 300 when cut by the horizontal plane is the maximum value among the changing areas.

According to such a configuration, the ratio of opening area S1 of opening portion 211 to area S2 of processing area 300 is increased, whereby it is possible to obtain good chip discharging performance.

Note that opening area S1 of opening portion 211 may be 25% or more of area S2 of processing area 300 (S1>0.25×S2), or 30% or more of area S2 of processing area 300 (S1≥0.3×S2).

As shown in Fig. 6, bed 11 has a first fixing portion 251, a second fixing portion 255, and a third fixing portion 253 (in the figures other than Fig. 6, illustration of first fixing portion 251, second fixing portion 255 and third fixing portion 253 is omitted). First fixing portion 251, second fixing portion 255 and third fixing portion 253 are provided integrally with bed 11. First fixing portion 251, second fixing portion 255 and third fixing portion 253 are fixed to a floor FL on which machine tool 100 is installed.

More specifically, first fixing portion 251, second fixing portion 255 and third fixing portion 253 are fastened to the foundation of floor FL on which machine tool 100 is installed, by using anchor bolts (not shown). First fixing portion 251, second fixing portion 255, and third fixing portion 253 are provided with a bolt insertion hole 252, a bolt insertion hole 256, and a bolt insertion hole 254 into which the anchor bolts are inserted, respectively.

First fixing portion 251, second fixing portion 255, and third fixing portion 253 are provided at a peripheral edge portion of bed 11 in top view which is included in a bottom portion of bed 11.

First fixing portion 251 is provided below APC mounting portion 311. First fixing portion 251 is provided at a position overlapping a center line 131 that passes through rotation center axis 130 of table 51 and extends in the Z-axis direction in top view.

Second fixing portion 255 and third fixing portion 253 are provided to column mounting portion 240. Second fixing portion 255 and third fixing portion 253 are located to be apart from each other in the X-axis direction. Second fixing portion 255 and third fixing portion 253 are provided at both end portions of column mounting portion 240 in the X-axis direction.

In such a configuration, APC mounting portion 311 provided at the end portion of opening portion 211 in the +Z-axis direction is fixed to floor FL by first fixing portion 251, and column mounting portion 240 provided at the end portion of opening portion 211 in the -Z-axis direction is fixed to floor FL by second fixing portion 255 and third fixing portion 253. In this case, since the number of fixed locations in APC mounting portion 311 is smaller than that in column mounting portion 240, under application of external force to bed 11, vibration is likely to occur on the end portion side of opening portion 211 in the +Z-axis direction.

On the other hand, in the present embodiment, rib portion 231 is provided at a position closer to first open end 211p than second open end 211q in the Z-axis direction. As a result, first open end 211p corresponds to the end portion of opening portion 211 in the +Z-axis direction where APC mounting portion 311 is provided, which makes it possible to more effectively restrain the vibration of bed 11. Further, since rib portion 231 is provided at a position farther apart from column 21 in the Z-axis direction, chips generated due to machining of the workpiece by tool spindle 91 can be efficiently discharged through opening portion 211.

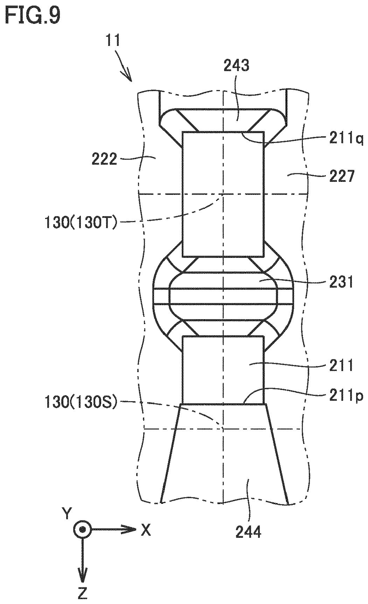

Fig. 9 is a top view which partially shows a modification of the bed in Fig. 6. Referring to Fig. 9, in this modification, when table 51 is positioned at the stroke end in the +Z-axis direction, that is, at the pallet change position by automatic pallet changer 321, rotation center axis 130S of table 51 is arranged at a position overlapping the opening of opening portion 211 in top view.

According to such a configuration, even when automatic pallet changer 321 changes pallets, it is possible to achieve good chip discharging performance.

Summarizing the structure of machine tool 100 according to Embodiment 1 of the present invention described above, machine tool 100 according to the present embodiment includes table 51 that is movable in the Z-axis direction as the first axial direction parallel to the horizontal direction, first guide portion 58 and second guide portion 59 that guide table 51 in the Z-axis direction and are arranged apart from each other in the X-axis direction as the second axial direction which is parallel to the horizontal direction and perpendicular to the Z-axis, and bed 11 having first guide mounting portion 14 and second guide mounting portion 15 on which first guide portion 58 and second guide portion 59 are mounted respectively, bed 11 being provided with opening portion 211 which is located between first guide mounting portion 14 and second guide mounting portion 15 and penetrates in the Y-axis direction as the third axial direction parallel to the vertical direction. First guide mounting portion 14 and second guide mounting portion 15 include first facing surface 222 and second facing surface 227 that face each other across opening portion 211 in the X-axis direction, respectively. Bed 11 further has rib portion 231 which is arranged in opening portion 211 and connected to first facing surface 222 and second facing surface 227.

According to thus-configured machine tool 100 of Embodiment 1 of the present invention, chips can be efficiently collected from processing area 300 on bed 11 while sufficiently ensuring the rigidity of bed 11.

### (Embodiment 2)

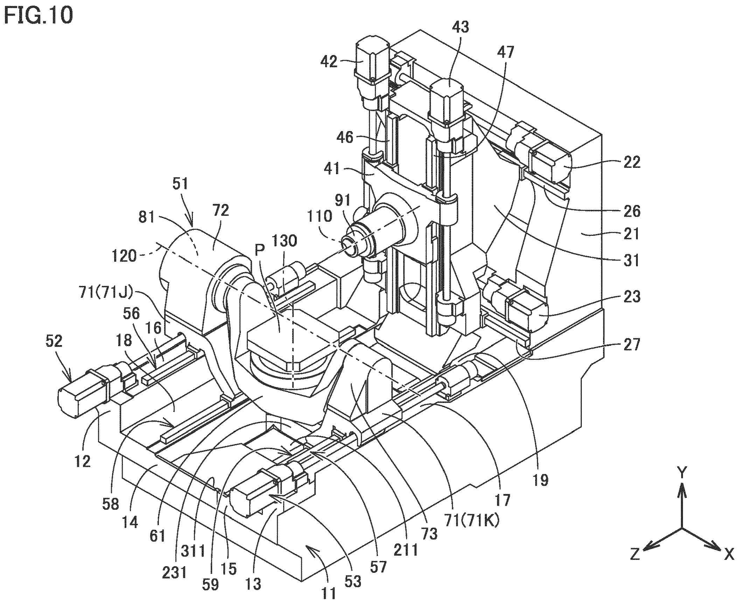

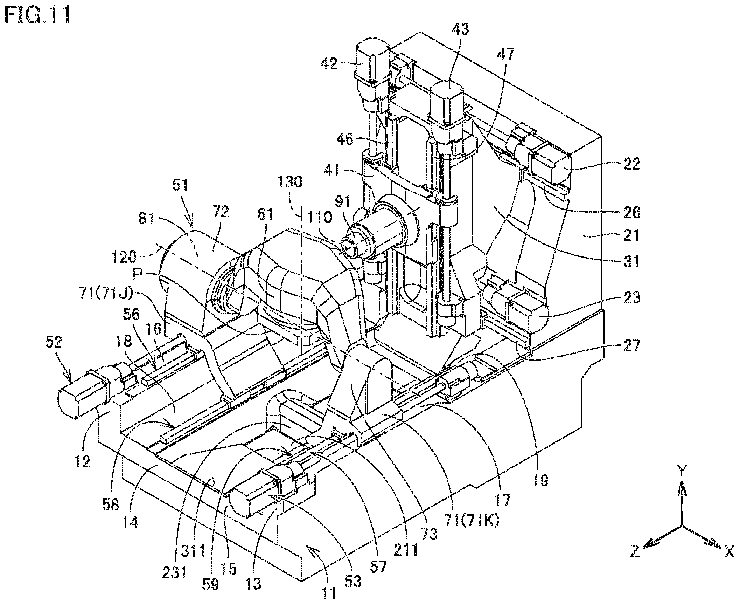

Fig. 10 is a perspective view showing a machine tool (when the table is in a reference posture) according to Embodiment 2 of the present invention. Fig. 11 is a perspective view showing the machine tool (when the table is in an inverted posture) according to Embodiment 2 of the present invention. The machine tool according to the present embodiment has basically a similar structure to machine tool 100 according to embodiment 1. Hereinafter, duplicative structures will not be repetitively described.

In the present embodiment, table 51 is provided so as to be turnable about a turning center axis 120 parallel to the X-axis direction.

Machine tool 100 has a third guide portion 56 and a fourth guide portion 57 in addition to first guide portion 58 and second guide portion 59. Third guide portion 56 and fourth guide portion 57 are attached to first peripheral wall portion 12 and second peripheral wall portion 13, respectively. Third guide portion 56 and fourth guide portion 57 are provided on first top surface 16 and second top surface 17, respectively. Third guide portion 56 and fourth guide portion 57 guide table 51 in the Z-axis direction together with first guide portion 58 and second guide portion 59.

First feeding device 52 and second feeding device 53 are provided on first top surface 16 and second top surface 17, respectively.

Table 51 has workpiece holder 61, table base 71 (71J, 71K), and a turning device 81.

Workpiece holder 61 is provided on bed 11. Workpiece holder 61 is provided to straddle between first peripheral wall portion 12 and second peripheral wall portion 13 in the X-axis direction. Workpiece holder 61 is supported by table base 71.

Table base 71 has a first support portion 72 and a second support portion 73. First support portion 72 and second support portion 73 face each other through workpiece holder 61 in the X-axis direction. Workpiece holder 61 is supported by first support portion 72 and second support portion 73 so as to be turnable about turning center axis 120.

Table base 71 has a first table base 71J and a second table base 71K. First table base 71J and second table base 71K are provided apart from each other in the X-axis direction. First table base 71J and second table base 71K are separated from each other in the X-axis direction. First table base 71J and second table base 71K are separated from each other in a range where they overlap opening portion 211 of bed 11 in top view. First feeding device 52, third guide portion 56 and first guide portion 58 are connected to first table base 71J. Second feeding device 53, fourth guide portion 57 and second guide portion 59 are connected to second table base 71K.

First table base 71J has first support portion 72. Second table base 71K has second support portion 73. First support portion 72 is provided above first peripheral wall portion 12. Second support portion 73 is provided above second peripheral wall portion 13.

Turning device 81 is provided on first support portion 72. Turning device 81 is incorporated in first support portion 72. Turning device 81 turns workpiece holder 61 around turning center axis 120.

According to such a configuration, the structure in which table base 71 is divided into first table base 71J and second table base 71K makes it possible to further improve the discharging performance of chips generated on pallet P during machining of the workpiece.

Bed 11 in Embodiment 1 and bed 11 in the present embodiment have the same structure.

According to the thus-configured machine tool of Embodiment 2 of the present invention, the effect described in Embodiment 1 can be achieved in the same manner.

It should be noted that the embodiments disclosed at this time are illustrative in all respects and not restrictive. The scope of the present invention is indicated by the claims rather than the above description, and is intended to include meanings equivalent to the claims and all changes within the claims.

### INDUSTRIAL APPLICABILITY

The present invention is applicable to a machine tool such as a horizontal machining center.

### REFERENCE SIGNS LIST

11 bed; 12 first peripheral wall portion; 13 second peripheral wall portion; 14 first guide mounting portion; 15 second guide mounting portion; 16 first top surface; 17 second top surface; 18 third top surface; 19 fourth top surface; 21 column; 26, 27, 46, 47 guide portion; 22, 23, 42, 43 feeding device; 31 saddle; 41 cross slide; 51 table; 52 first feeding device; 53 second feeding device; 56 third guide portion; 57 fourth guide portion; 58 first guide portion; 59 second guide portion; 61 workpiece holder; 71 table base; 71J first table base; 71K second table base; 72 first support portion; 73 second support portion; 81 turning device; 91 tool spindle; 92 spindle end face; 100 machine tool; 110, 130, 130S, 130T rotation center axis; 120 turning center axis; 131 center line; 211 opening portion; 211p first open end; 211q second open end; 221 first guide mounting surface; 222 first facing surface; 226 second guide mounting surface; 227 second facing surface; 231 rib portion; 232 lower surface; 233 first side surface; 234 second side surface; 235 first inclined surface; 236 second inclined surface; 240 column mounting portion; 241 fifth top surface; 242 inclined surface; 243 fourth facing surface; 244 third facing surface; 251 first fixing portion; 252, 254, 256 bolt insertion hole; 253 third fixing portion; 255 second fixing portion, 261, 266 servo motor; 262, 267 screw shaft; 263, 268 nut; 271, 276 rail; 272, 277 slider; 281 cover body; 300 processing area; 311 APC mounting portion; 321 automatic pallet changer.

## Claims

1. A machine tool comprising:
a table movable in a first axial direction parallel to a horizontal direction;
a first guide portion and a second guide portion that guide the table in the first axial direction and are arranged apart from each other in a second axial direction which is parallel to the horizontal direction and orthogonal to the first axis; and
a bed including a first guide mounting portion and a second guide mounting portion on which the first guide portion and the second guide portion are mounted respectively, the bed being provided with an opening portion which is located between the first guide mounting portion and the second guide mounting portion and penetrates in a third axial direction parallel to a vertical direction, wherein the first guide mounting portion and the second guide mounting portion include a first facing surface and a second facing surface that face each other across the opening portion in the second axial direction, and the bed further includes a rib portion which is arranged in the opening portion and is connected to the first facing surface and the second facing surface.

2. The machine tool according to claim 1, wherein the opening portion has a first open end arranged at one end of the opening portion in the first axial direction and a second open end arranged at the other end of the opening portion in the first axial direction, and a length between the first open end and the second open end in the first axial direction is greater than a length of the opening portion in the second axial direction.

3. The machine tool according to claim 1 or 2, wherein the opening portion has a first open end arranged at one end of the opening portion in the first axial direction and a second open end arranged at the other end of the opening portion in the first axial direction, and a length between the first open end and the second open end in the first axial direction is greater than a maximum stroke length of the table in the first axial direction.

4. The machine tool according to any one of claims 1 to 3, further comprising an automatic pallet changer (APC) for changing a pallet to be mounted on the table, wherein the bed further includes an APC mounting portion that connects the first guide mounting portion and the second guide mounting portion at one end side of the opening portion in the first axial direction, the automatic pallet changer being mounted on the APC mounting portion, the table is rotatable around a rotation center axis extending in the third axial direction, and when the table is positioned at a pallet change position by the automatic pallet changer, the rotation center axis is arranged at a position overlapping an opening of the opening portion when viewed in the third axial direction.

5. The machine tool according to any one of claims 1 to 4, further comprising a cover body that defines a processing area on the bed, wherein an opening area of the opening portion when the opening portion is cut by a horizontal plane is 20% or more of an area of the processing area when the processing area is cut by a horizontal plane.

6. The machine tool according to any one of claims 1 to 5, wherein the rib portion includes a lower surface parallel to a horizontal plane, a first side surface and a second side surface that respectively rise from both end portions of the lower surface in the first axial direction, a first inclined surface extending obliquely upward from an upper end portion of the first side surface along the first axial direction, and a second inclined surface that extends obliquely upward from an upper end portion of the second side surface along the first axial direction and intersects with the first inclined surface.

7. The machine tool according to claim 1, further comprising an automatic pallet changer (APC) for changing a pallet to be mounted on the table; and
a column for supporting a tool spindle,
wherein the bed further includes:
an APC mounting portion that connects the first guide mounting portion and the second guide mounting portion on one end side of the opening portion in the first axial direction, the automatic pallet changer being mounted on the APC mounting portion;
a column mounting portion that connects the first guide mounting portion and the second guide mounting portion on the other end side of the opening portion in the first axial direction, the column being mounted on the column mounting portion;
a first fixing portion that is provided in the APC mounting portion and is fixed to a floor on which the machine tool is installed; and
a second fixing portion and a third fixing portion that are provided in the column mounting portion, are located apart from each other in the second axial direction, and are fixed to the floor on which the machine tool is installed,
wherein the opening portion has a first open end arranged at one end of the opening portion in the first axial direction and a second open end arranged at the other end of the opening portion in the first axial direction, and
wherein the rib portion is provided at a position closer to the first open end than the second open end in the first axial direction.
